# EUROPÄISCHE PATENTANMELDUNG

(11) **EP 4 702 887 A2**
(43) Veröffentlichungstag der Anmeldung: **04.03.2026**
(21) Anmeldenummer: 25198905.9
(22) Anmeldetag: 29.08.2025
(51) Int. Cl.: A47G 19/22, A47J 41/02, A47G 23/03, A47J 41/00, B65D 81/38

(54) **STANDFESTER THERMOBEHÄLTER**

(30) Priorität: 30.08.2024 DE 102024124941
(71) Anmelder: maglassX GmbH, 94116 Hutthurm (DE)
(72) Erfinder: Fritz, Christoph, 94078 Freyung (DE)
(74) Vertreter: Ridderbusch, Oliver

(57) **Zusammenfassung**

Die Erfindung betrifft einen Thermobehälter (1) zur temperaturerhaltenden Lagerung und insbesondere zum temperaturerhaltenden Transport von Lebensmitteln mit einem Behälter (10) mit einer Aufnahmekammer (14) für Lebensmittel und einem Deckel (16) zum Verschließen des Thermobehälters (1). Der Behälter (10) weist benachbart zu seinem Boden (15) einen zentralen Magnet (2) auf, der in seinen magnetischen Eigenschaften mit insbesondere seiner Haltekraft bzw. seiner magnetischen Anziehungskraft und seinen Abmessungen in Übereinstimmung mit dem Thermobehälter (1) derart ausgewählt, ausgebildet und angeordnet ist, dass der Thermobehälter (1) von dem Magnet (2) an einer vorbestimmten Position (P, P1, P2) standfest, rutschfest und ortsfest gehalten wird, an der ein geeignetes Metallelement oder eine geeignete Metallschicht (M) vorgesehen ist, die mit dem Magnet (2) zusammenwirkt.

Die Erfindung betrifft dabei außerdem ein System (1, 2, 3) mit einem vorstehenden standfesten Thermobehälter (1) und wenigstens einem mit dem Magnet (2) des Thermobehälters (1) zusammenwirkenden, ein Metallelement oder eine Metallschicht (M) aufweisenden Untersetzer (3).

## Beschreibung

Die Erfindung betrifft einen Thermobehälter zur temperaturerhaltenden Lagerung und insbesondere zum temperaturerhaltenden Transport von Lebensmitteln, der insbesondere standfest ausgebildet ist. Die Erfindung betrifft dabei außerdem ein System mit einem standfesten Thermobehälter und wenigstens einem mit dem Thermobehälter zusammenwirkenden, ein Metallelement oder eine Metallschicht aufweisenden Untersetzer.

Thermobehälter dienen vorrangig der Mitnahme von insbesondere großteils in flüssiger Form vorliegenden Lebensmitteln, um diese fern von zuhause, beispielsweise auf der Arbeit oder auf Reisen, zu einem späteren Zeitpunkt mit einer möglichst konservierten Temperatur zu konsumieren. Die Lebensmittel, Getränke oder Genussmittel, die wünschenswert in Thermobehältern transportiert werden können, betreffen insbesondere Suppen, Heiß- und Kaltgetränke wie beispielsweise Tee, Kaffee oder Erfrischungsgetränke.

Beim Transport derartiger Thermobehälter bis zu dem bestimmungsgemäßen Verzehr ihres Inhalts sollte der Thermobehälter mit seinem Inhalt nicht nur vor Temperaturverlust sondern auch vor beim Transport möglicher Weise unbeabsichtigten Austritt des Inhalts aus dem Thermobehälter geschützt sein, weshalb derartige Thermobehälter einen geeigneten Deckel aufweisen. Bei einem wünschenswerten Konsum zumindest eines Teils des Inhalts auch bereits während des Transports wird natürlich der Deckel der Thermobehälter zumindest teilweise geöffnet oder entfernt, wobei der Thermobehälter regelmäßig von Hand gehalten wird und die Gefahr eines unbeabsichtigten zumindest teilweise Austritts des Inhalts besteht.

### Stand der Technik

Aus der DE 10 2017 002 311 A1 ist ein Glasgefäß mit einem in dem Gefäß beherbergten Metallelement bekannt. Das Glasgefäß umfasst in seinem Fuß eine untere Ausnehmung, die das Metallelement beherbergt, wobei das Metallelement mittels einem transparenten Klebstoff an dem Boden der Ausnehmung mit dem Fuß verklebt ist und von einem einen verbleibenden Bereich der Ausnehmung auffüllenden transparenten Kunststoff eingebettet ist. Das Glasgefäß ist dabei insbesondere ein Trinkglas aus Kristallglas und das Metallelement ein Magnet. Bei der Herstellung des Glasgefäßes wird in einem ersten Schritt eine Ausnehmung in dem Glasgefäß mittels Einführen eines Stempels in eine Glasschmelze des Gefäßes bereitgestellt. In einem zweiten Schritt wird das Metallelement mittels Klebstoff mit dem Boden der Ausnehmung verklebt. Schließlich wird in einem dritten Schritt die Ausnehmung mit dem Kunststoff mittels Verguß aufgefüllt. Die Herstellung eines vorstehenden Gefäßes mit dem in dessen Boden mittels Kunststoff verklebten Metallelements ist wie vorstehend beschrieben entsprechend aufwendig.

### Aufgabenstellung

Die Aufgabe der Erfindung besteht darin einen Thermobehälter zur Mitnahme von Lebensmitteln bereitzustellen, der eine wünschenswerte Temperaturerhaltung der Lebensmittel insbesondere während deren Mitnahme und Transport bereitstellt, und der insbesondere gestattet bereits während eines Transports des Thermobehälters dessen Inhalt bequem und sicher zu konsumieren. Es ist dabei insbesondere Aufgabe der Erfindung einen standfesten und rutschfesten Thermobehälter bereitzustellen, der insbesondere auch zum Gebrauch in einem Fahrzeug geeignet ist, sowie ein System zur einfachen und stabilen Positionierung eines Thermobehälters bereitzustellen.

Die Aufgabe wird durch die Merkmale der unabhängigen Ansprüche gelöst.

Vorteilhafte Ausführungen der Erfindung sind in den Unteransprüchen und/oder der nachfolgenden Beschreibung angegeben.

Die Erfindung betrifft insbesondere einen Thermobehälter zur temperaturerhaltenden Lagerung und insbesondere zum temperaturerhaltenden Transport von Lebensmitteln mit einem Behälter mit einer Aufnahmekammer für Lebensmittel und einem Deckel zum Verschließen des Thermobehälters. Der Behälter weist benachbart zu seinem Boden einen zentralen Magnet auf, der in seinen magnetischen Eigenschaften mit insbesondere seiner Haltekraft bzw. seiner magnetischen Anziehungskraft und seinen Abmessungen in Übereinstimmung mit dem Thermobehälter derart ausgewählt, ausgebildet und angeordnet ist, dass der Thermobehälter von dem Magnet an einer vorbestimmten Position standfest, rutschfest und ortsfest gehalten wird, an der ein geeignetes Metallelement oder eine geeignete Metallschicht vorgesehen ist, die mit dem Magnet zusammenwirkt.

Der einen vorteilhaften Magnet aufweisende Thermobehälter ist insbesondere zur Mitnahme und zum Transport von Lebensmitteln auch in flüssiger Form geeignet. Bereits während eines Transports des Thermobehälters insbesondere auch in einem Fahrzeug kann der Thermobehälter auch geöffnet an einer vorbestimmten geeigneten Position stabil, standfest, rutschfest und ortsfest aufgestellt werden, und es ist somit gestattet bereits während der Mitnahme und des Transports des Thermobehälters den Inhalt des Thermobehälters bequem und sicher zumindest teilweise zu konsumieren.

Geeigneter Weise kann der Boden des Thermobehälters einen äußeren umlaufenden Rand aufweisen, und der Magnet derart angeordnet und ausgebildet sein, dass der auf den Boden aufgestellte Thermobehälter auf dem äußeren Rand des Bodens ruht, während der zentral angeordnete Magnet lediglich minimal von einer Oberfläche beabstandet ist, auf die der Thermobehälter aufgestellt ist. Der Magnet kann damit seine volle Anziehungskraft zu dem Metallelement oder der Metallschicht an der Position entfalten, an der der Thermobehälter aufgestellt ist, wonach der Thermobehälter besonders stabil und sicher auch in einem Fahrzeug aufgestellt ist.

Zur Bereitstellung der vorstehenden vorteilhaften Anordnung des Magneten am Boden des Thermobehälters weist der Boden einen zentralen Bereich zur Beherbergung des Magneten auf, der geeigneter Weise von einem inneren Rand am Boden begrenzt wird. Der Magnet kann dabei geeigneter Weise flachzylindrisch und vorteilhaft formschlüssig korrespondierend mit dem zentralen Bereich ausgebildet sein und von einer Abdeckung in dem zentralen Bereich gehalten werden. Auf diese Weise ist der Magnet besonders stabil in dem zentralen Bereich am Boden des Thermobehälters beherbergt und vor Verschmutzung und Beschädigung insbesondere seiner Oberfläche geschützt..

Der innere Rand des zentralen Bereichs ist geeigneter Weise niedriger ausgebildet als der äußere Rand und wird von dem äußeren Rand umgeben, auf dem der aufgestellte Thermobehälter stabil, rutschfest und ortsfest steht. Zwischen dem inneren Rand und dem äußeren Rand erstreckt sich geeigneter Weise eine um den inneren Rand umlaufende Nut, in die ein äußerer Rand der Abdeckung eingreift, wonach der zentrale Bereich besonders zuverlässig abgedeckt ist.

Zur Bereitstellung der vorstehenden vorteilhaften Eigenschaften sind die Abmessungen des Bodens mit dem zentralen Bereich, der Abdeckung, des inneren Rands und des äußeren Rands geeigneter Weise derart ausgewählt und ausgebildet, dass der in dem zentralen Bereich formschlüssig beherbergte und geschützte Magnet des auf dem äußeren Rand des Bodens ruhenden Thermobehälters mit einem vorbestimmten geringen Abstand von max. 2mm und vorteilhaft max. 1mm von einer Oberfläche beabstandet ist, auf die der Thermobehälter aufgestellt ist.

Der Behälter des Thermobehälters kann besonders stabil vorteilhaft aus einem Edelstahlmaterial ausgebildet sein, und außenseitig lackiert oder beschichtet und/oder eloxiert sein. Die Abdeckung ist dabei geeigneter Weise ebenfalls aus einem Edelstahlmaterial bereitgestellt und mit dem inneren Rand des zentralen Bereichs des Bodens verschweißt. Auf diese Weise ist der flachzylindrische Magnet besonders stabil in dem zentralen Bereich beherbergt und zuverlässig geschützt. Zur Bereitstellung von wünschenswerten magnetischen Eigenschaften ist der Magnet geeigneter Weise ein Neodym Magnet.

Die Aufnahmekammer des Behälters des Thermobehälters kann insbesondere vorteilhaft zur Aufnahme von Lebensmitteln in flüssiger Form und Getränken geeignet sein. Zur Bereitstellung einer wünschenswerten thermischen Isolationswirkung der Aufnahmekammer kann der Behälter geeigneter Weise doppelwandig ausgeführt sein und einen Innenkörper und einen Außenkörper aufweisen, wobei zwischen dem Innenkörper und dem Außenkörper ein Hohlraum ausgebildet ist, der evakuiert sein kann. Der Innenkörper des Behälters kann darüber hinaus eine Kupferbeschichtung aufweisen, so dass Strahlungswärme aus der Aufnahmekammer an der Kupferbeschichtung reflektiert.

Ein zentraler Bereich des Außenkörpers am Boden des Thermobehälters bildet geeigneter Weise zusammen mit dem inneren Rand des Bodens und der Abdeckung den vorstehend beschriebenen zentralen Bereich, in dem der flachzylindrische Magnet formschlüssig beherbergt und geschützt ist.

Bei der Verwendung des vorstehenden mit einem Magnet ausgestatteten Thermobehälters wirkt der Thermobehälter wie vorstehend beschrieben vorteilhaft mit einem geeigneten metallischen Untergrund zusammen. Hierbei kann der Thermobehälter insbesondere vorteilhaft mit einem geeigneten Untersetzer zusammenwirken, der eine mit dem Magnet des Thermobehälters zusammenwirkende Metallschicht aufweist und geeigneter Weise als Nano-Gel Klebepad mit einer rutschfesten, haftenden Unterseite ausgebildet ist. Ein derartiger Untersetzer ist besonders vorteilhaft, nachdem der Untersetzer eine vorteilhafte, einfache und flexible Nachrüstung einer Oberfläche etwa eines Tabletts, Tisches, einer Ablage etwa auch in einem Fahrzeug, etc. gestattet und eine einfache und vorteilhafte und insbesondere auch flexible und reversible, sowie sichere und ortsfeste Positionierung des Thermobehälters ermöglicht.

Die Erfindung betrifft demnach außerdem ein System mit einem vorstehend beschriebenen Thermobehälter, der mit dem Magnet ausgestattet ist, und mit einem mit dem Magnet korrespondierenden Untersetzer, der eine mit dem Magnet zusammenwirkende Metallschicht aufweist und als Nano-Gel Klebepad mit einer rutschfesten, haftenden Unterseite derart ausgebildet ist, dass der Untersetzer an einer vorbestimmten Position rutschfest und ortsfest haftet, und dabei mit dem Magnet bestimmungsgemäß derart zusammenwirkt, dass der Thermobehälter auf dem Untersetzer stabil, standfest, rutschfest und ortsfest positioniert ist.

Das System kann vorteilhaft eine Vielzahl von vorstehenden Untersetzern aufweisen, die zur rutschfesten Positionierung des Thermobehälters an wenigstens einer und vorteilhaft einer Vielzahl von Positionen vorgesehen sind, wobei die Untersetzer insbesondere in deren Abmessung geeigneter Weise jeweils mit dem Boden des Thermobehälters korrespondierend und insbesondere vergleichsweise größer als der Boden ausgebildet sind. Ein derartiges System gestattet eine besonders einfache und flexible Handhabung des vorstehend beschriebenen Thermobehälters für viele Anwendungen und insbesondere mit einem Transportmittel und/oder in einem Fahrzeug.

Dabei ist der Thermobehälter für viele Anwendungen und insbesondere für den sicheren Transport von Lebensmitteln insbesondere in flüssiger Form geeignet, z.B. auf dem Weg zur Arbeit, zu Veranstaltungen, auf Reisen beim Camping, etc., wobei mit dem Thermobehälter insbesondere ein Thermobecher bereitgestellt ist.

Ein vorstehend beschriebener Thermobehälter und ein vorstehend beschriebenes System ist insbesondere zur Verwendung in Zusammenwirken mit einem geeigneten Transportmittel und/oder in einem Fahrzeug jeder Art geeignet, wobei der Magnet bestimmungsgemäß zum rutschfesten Aufstellen des Thermobehälters vorgesehen ist und dabei mit einem geeigneten Metallelement zusammenwirkt, das an dem Transportmittel oder einem Einrichtungselement eines Fahrzeugs vorgesehen ist.

Es ist klar, dass ein erfindungsgemäßer Thermobehälter grundsätzlich in seinen Abmessungen und Dimensionen und insbesondere seiner Aufnahmekapazität nicht beschränkt ist und entsprechend beliebig dimensioniert und ausgestaltet sein kann. Dies gilt auch für den Magnet des Thermobehälters, der natürlich in Übereinstimmung und korrespondierend mit insbesondere auch der Aufnahmekapazität des Thermobehälters geeignet ausgebildet ist.

Eine besonders vorteilhafte Ausführung eines insbesondere als Thermobecher zur Aufnahme von Flüssigkeiten geeignet ausgebildeten Thermobehälters kann insbesondere für dessen einfache Handhabung zu seinem Boden hin vorteilhaft konisch verjüngt ausgebildet sein, wobei der Thermobehälter insbesondere auch zur Aufnahme eines Flüssigkeitsvolumens im Bereich von 100ml bis 1.500ml und bevorzugt von 250ml bis 500ml und besonders bevorzugt von etwa 300ml bis 350ml geeignet ausgebildet sein kann.

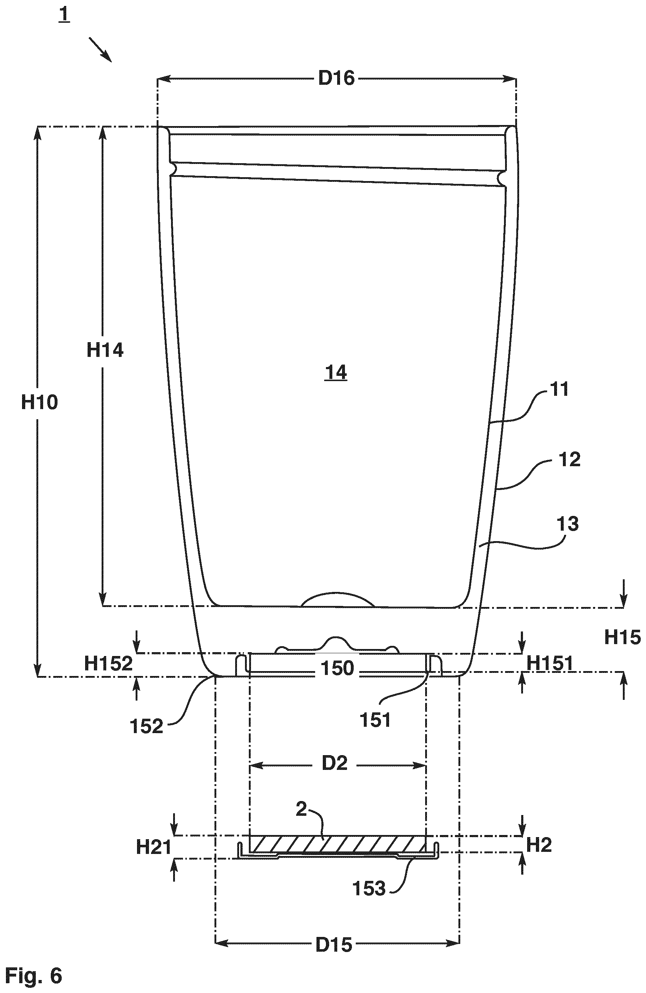

Weitere insbesondere auch technische Details eines derartigen, bevorzugt als Thermobecher ausgebildeten Thermobehälters insbesondere zu dessen Abmessungen, dessen Magnet mit dessen Ausbildung, Anordnung und insbesondere auch Befestigung in dem zentralen Bereich des Bodens des Thermobechers, wobei der Magnet auch mit dem zentralen Bereich des Bodens verklebt oder mechanisch in den zentralen Bereich des Bodens geklemmt oder gepresst sein kann, etc. werden nachfolgend ausführlich insbesondere unter Bezugnahme auf Fig. 6 beschrieben.

Die Abdeckung des Magneten und des zentralen Bereichs kann wie vorstehend beschrieben mit dem Boden des Thermobehälters und geeigneter Weise insbesondere mit dessen innerem Rand verschweißt sein, wobei die Abdeckung auch auf andere Weise an dem Boden angebracht sein kann. Beispielsweise kann die Abdeckung für eine bestimmungsgemäß stabile und sichere Abdeckung des Magneten auch auf andere Weise mit dem Boden verschweißt sein oder an den Boden gelötet oder an den Boden und/oder den Magneten geklebt sein oder auf geeignete mechanische Weise an dem Boden befestigt sein.

Ein vorstehend beschriebenes System aus einem Thermobehälter und geeigneten Untersetzern kann natürlich auch mehr als einen Thermobehälter aufweisen, wobei die Thermobehälter insbesondere auch mit ihren Abmessungen und ihrem Füllvolumen und mit ihren Magneten unterschiedlich ausgebildet sein können. Die Untersetzer weisen dabei geeigneter Weise für alle Thermobehälter des Systems geeignete Ausbildungen insbesondere ihrer Abmessungen und ihrer als Nano-Gel Klebepad rutschfest und haftend ausgebildeten Unterlage auf, so dass ein System zum rutschfesten Aufstellen der unterschiedlich ausgebildeten standfesten Thermocontainer an vorbestimmten Positionen bereitgestellt ist.

### Ausführungsbeispiele

Ausführungsbeispiele der Erfindung sind in den Figuren dargestellt und werden im Folgenden näher erläutert. Es zeigen:
- Fig. 1: vier Darstellungen eines Thermobehälters nach einer Ausführung der Erfindung, nämlich eine Seitenansicht, eine Ansicht mit Blick auf den Deckel des Thermobehälters von oben, eine Ansicht bei abgenommenem Deckel, und eine Ansicht auf den Boden des Thermobehälters;
- Fig. 2: eine vergrößerte Darstellung des Thermobehälters von Fig. 1 von unten mit entfernter zentraler Abdeckung des Bodens zusammen mit einem Magnet nach einer Ausführung der Erfindung;
- Fig. 3: einen Längsschnitt durch den Thermobehälter von Fig. 1 ohne dessen Deckel zusammen mit einem Magnet und einer für den Boden des Thermobehälters geeigneten Abdeckung;
- Fig. 4: den Thermobehälter von Fig. 3 zusammengesetzt;
- Fig. 5: den Thermobehälter von Fig. 1 zusammen mit für den Thermobehälter geeigneten Untersetzern;
- Fig. 6: eine weitere Darstellung des Thermobehälters von Fig. 3 und 4;
- Fig. 7: den Thermobehälter von Fig. 1, 3 und 4 zusammen mit einem Thermobehälter nach einer weiteren Ausführung der Erfindung und zusammen mit für die Thermobehälter geeigneten Untersetzern.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente können unterschiedlich skaliert sein. Nicht alle Bezugszeichen sind in allen Figuren dargestellt.

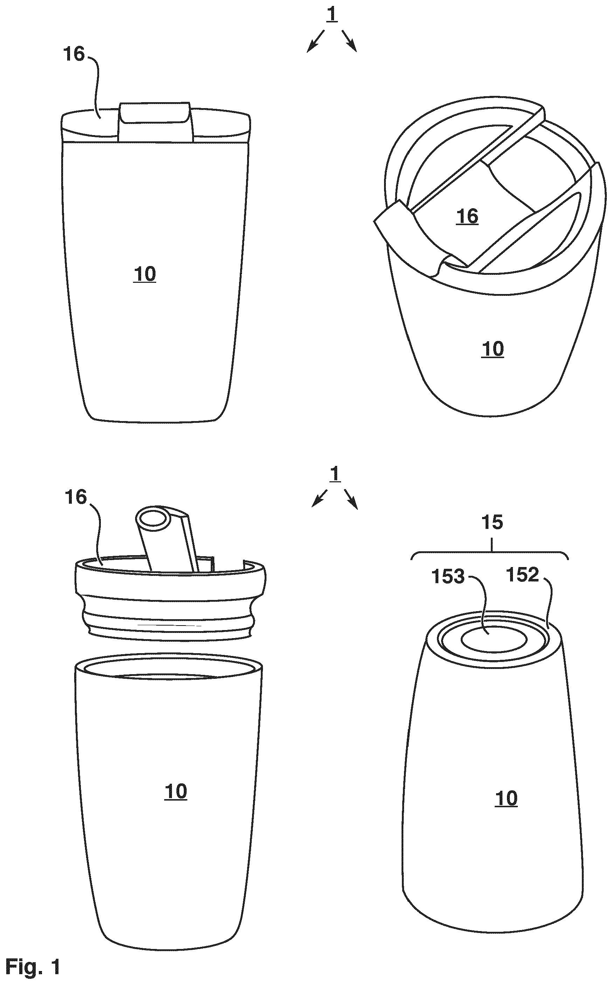

Fig. 1 zeigt vier Darstellungen eines Thermobehälters 1 nach einer Ausführung der Erfindung mit dem Behälter 10, nämlich eine Seitenansicht des Behälters 10, eine Ansicht mit Blick auf den Deckel 16 des Thermobehälters 1 von oben, eine Ansicht bei abgenommenem Deckel 16 und eine Ansicht auf den Boden 15 des Thermobehälters 1.

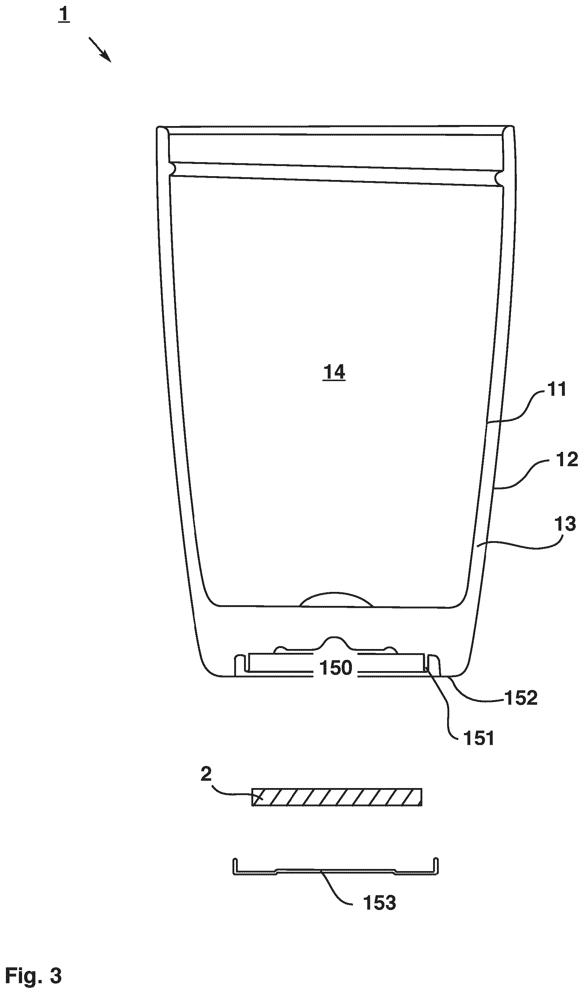

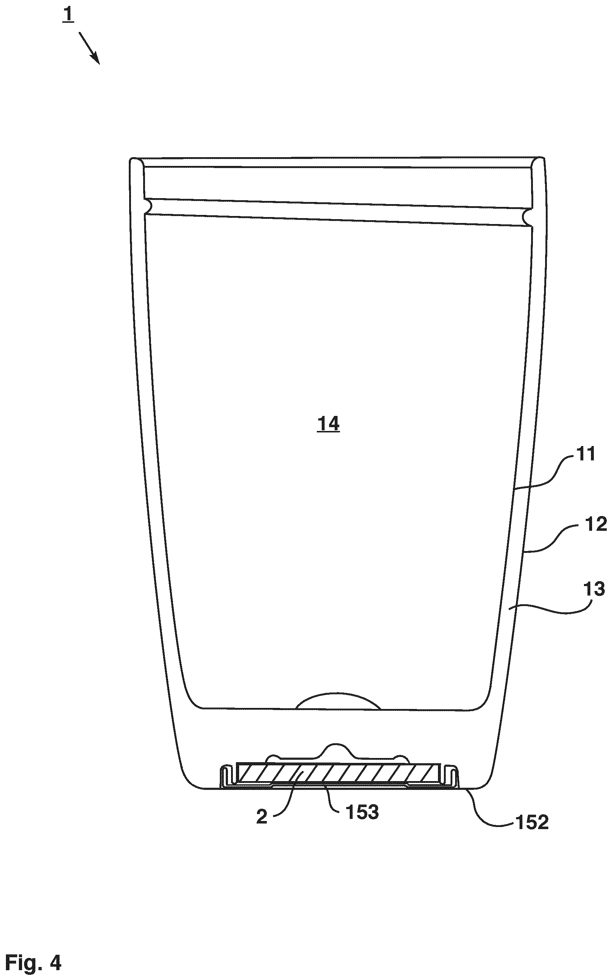

Der Thermobehälter 1 dient vorrangig der Mitnahme von insbesondere großteils in flüssiger Form vorliegenden Lebensmitteln, um diese fern von zuhause, beispielsweise auf der Arbeit oder auf Reisen, zu einem späteren Zeitpunkt mit einer möglichst konservierten Temperatur zu konsumieren, wobei mit dem Thermobehälter 1 insbesondere ein Thermobecher 1 bereitgestellt ist. Der Thermobehälter 1 ist mit dem Behälter 10 aus geeigneter Weise einem Edelstahlmaterial entsprechend ausgelegt, was nachfolgend insbesondere unter Bezugnahme auf Fig. 3 und Fig. 4 beschrieben wird. Der Behälter 10 aus einem Edelstahlmaterial der Ausführung von Fig. 1 ist außenseitig lackiert.

Der Thermobehälter 1 weist einen oberen Deckel 16 auf, mittels dem der Thermobehälter 1 verschlossen werden kann, und der derart ausgebildet ist, dass der Deckel 16 etwa zur Entnahme einer Flüssigkeit auch nur teilweise geöffnet werden kann.

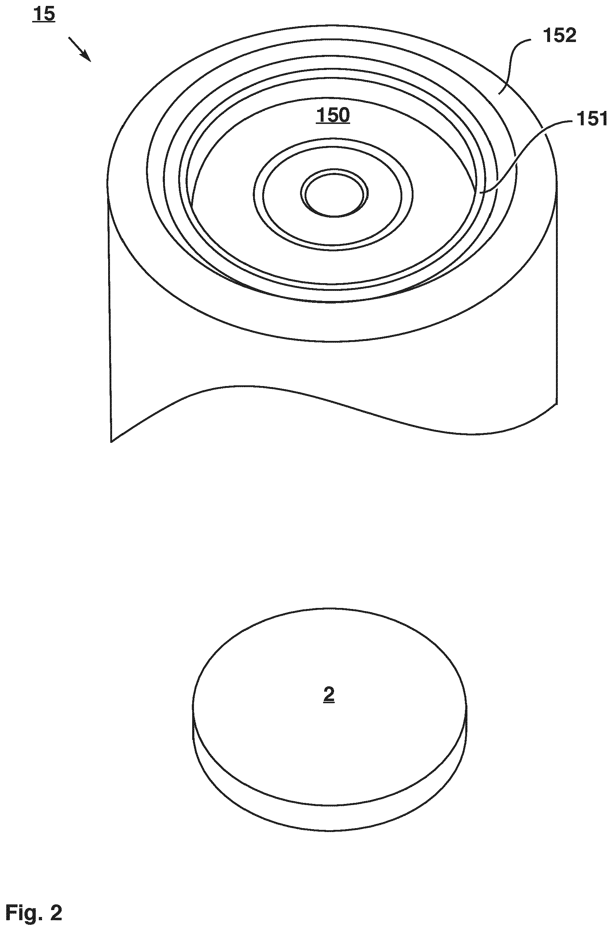

Der Boden 15 des Behälters 10 weist einen umlaufenden äußeren Rand 152 auf, auf dem der aufgestellte Thermobehälter 1 steht. Der Boden 15 weist außerdem eine zentrale Abdeckung 153 geeigneter Weise ebenfalls aus einem Edelstahlmaterial auf, die einen vorteilhaften zentralen Magnet 2 abdeckt, der in einem zentralen Bereich 150 des Bodens 15 beherbergt ist. Auch diesbezüglich wird hier auf die nachfolgende Beschreibung insbesondere unter Bezugnahme auf Fig. 2, Fig. 3 und Fig. 4 verwiesen.

Der zentrale Magnet 2 ist in seinen magnetischen Eigenschaften mit insbesondere seiner Haltekraft bzw. seiner magnetischen Anziehungskraft und seinen Abmessungen in Übereinstimmung mit dem Thermobehälter 1 derart ausgewählt, ausgebildet und angeordnet, dass der Thermobehälter 1 von dem Magnet 2 an einer vorbestimmten Position P, P1, P2 rutschfest und ortsfest gehalten wird, an der ein geeignetes Metallelement oder eine geeignete Metallschicht vorgesehen ist, die mit dem Magnet 2 zusammenwirkt.

Mit dem in seinem Boden 15 einen vorteilhaften Magnet 2 aufweisenden Thermobehälter 1 ist ein standfester und rutschfester Thermobehälter 1 und insbesondere ein Thermobecher 1 bereitgestellt, der für viele Anwendungen und insbesondere für den sicheren Transport von Lebensmitteln insbesondere in flüssiger Form geeignet ist, z.B. auf dem Weg zur Arbeit, zu Veranstaltungen, auf Reisen beim Camping, etc.. Der Thermobehälter 1 ist dabei besonders vorteilhaft für dessen Verwendung in einem Fahrzeug. Bei dem Magnet 2 kann es sich insbesondere vorteilhaft um einen Neodym Magnet 2 handeln.

Fig. 2 zeigt eine vergrößerte Darstellung des Thermobehälters 1 von Fig. 1 von unten mit entfernter zentraler Abdeckung 153 des Bodens 15 zusammen mit einem Magnet 2 nach einer Ausführung der Erfindung, wobei der flachzylindrisch ausgebildete Magnet 2 der Klarheit und Übersichtlichkeit halber außerhalb des zentralen Bereichs 150 dargestellt ist, der ihn beherbergt. Der Magnet 2 ist dafür vorteilhaft formschlüssig korrespondierend mit dem zentralen Bereich 150 ausgebildet, der von einem inneren Rand 151 begrenzt wird.

Der innere Rand 151 wird umgeben von dem vorstehend beschriebenen äußeren Rand 152, auf dem der aufgestellte Thermobehälter 1 steht. Der innere Rand 151 ist entsprechend niedriger ausgebildet als der äußere Rand 152. Zwischen dem inneren Rand 151 und dem äußeren Rand 152 erstreckt sich eine um den inneren Rand 151 umlaufende Nut, in die ein äußerer Rand der vorstehend unter Bezugnahme auf Fig. 1 beschriebenen Abdeckung 153 eingreift. Für eine stabile, sichere und geschützte Anordnung und Beherbergung des Magneten 2 in dem zentralen Bereich 150 ist die Abdeckung 153 vorteilhaft mit dem inneren Rand 151 des zentralen Bereichs 150 verschweißt. Die Abdeckung 153 ist dabei wie der Behälter 10 und demnach auch sein Boden 15 aus einem Edelstahlmaterial bereitgestellt.

Im Zentrum des inneren zentralen Bereichs 150 ist benachbart zu dem Magnet 2 eine nach der Herstellung des Thermobehälters 1 stoffschlüssig versiegelte Saugöffnung zur Evakuierung eines Hohlraums 13 des Behälters 10 und Bereitstellung dessen thermoisolierenden Eigenschaften angeordnet, was nachfolgend unter Bezugnahme auf Fig. 3 und Fig. 4 beschrieben wird.

Fig. 3 zeigt einen Längsschnitt durch das Behälterteil 10 des Thermobehälters 1 von Fig. 1 zusammen mit dem Magnet 2 und der für den Boden 15 des Thermobehälters 1 und für den Magnet 2 geeigneten Abdeckung 153 in deren einzelnen Bestandteilen, und Fig. 4 zeigt den bestimmungsgemäß zusammengesetzten Behälter 10 des Thermobehälters 1 von Fig. 3.

Der Behälter 10 des Thermobehälters 1 weist eine Aufnahmekammer 14 auf, die insbesondere zur Aufnahme von Lebensmitteln in flüssiger Form und Getränken geeignet ist. Zur Bereitstellung einer wünschenswerten thermischen Isolationswirkung der Aufnahmekammer 14 ist der Behälter 10 doppelwandig ausgeführt und besitzt einen Innenkörper 11 und einen Außenkörper 12, wobei zwischen dem Innenkörper 11 und dem Außenkörper 12 ein Hohlraum 13 gebildet ist. Der Hohlraum 13 ist beispielsweise evakuiert, wobei in diesem auch ein Getter angeordnet sein kann, um über lange Gebrauchsdauer des Thermobehälters 1 das Vakuum in dem Hohlraum 25 im Wesentlichen aufrecht zu erhalten.

Der Behälter 10 des Thermobehälters 1 ist wie vorstehend beschrieben aus einem Edelstahlmaterial ausgebildet, und geeigneter Weise durch einen Tiefziehvorgang hergestellt. Außenseitig ist der Behälter 10 geeigneter Weise lackiert. Der Innenkörper 11 des Behälters 10 weist vorteilhaft eine Kupferbeschichtung auf, so dass Strahlungswärme aus der Aufnahmekammer 14 an der Kupferbeschichtung reflektiert, wodurch heiße Flüssigkeiten oder Lebensmittel, die in der Aufnahmekammer 14 vorhanden sind, noch länger heiß gehalten werden. Gleiches gilt für gekühlte Flüssigkeiten oder Lebensmittel.

Um das Vakuum im Hohlraum 13 herzustellen, weist ein Bereich am Boden 15 des Behälters 10 eine Saugöffnung auf, über die der Hohlraum 13 evakuiert werden kann, um anschließend die Saugöffnung stoffschlüssig zu versiegeln, während das Vakuum im Hohlraum 13 aufrechterhalten bleibt.

Um den Innenkörper 11 und den Außenkörper 12 des Behälters 10 miteinander zu verbinden, ist eine an dem oberen Außenrand umlaufende Stoffschlussnaht vorgesehen, die sorgfältig nachbearbeitet ist, da die umlaufende Kante im Bereich der Stoffschlussnaht zugleich eine Trinkkante bildet, wenn Inhalte des Behälters 10 insbesondere direkt aus diesem getrunken werden sollen. Die Stoffschlussnaht kann beispielsweise eine Schweißnaht oder eine Lötverbindung umfassen.

Der Magnet 2 ist wie vorstehend beschrieben formschlüssig korrespondierend mit dem zentralen Bereich 150 in dem Boden 15 des Thermobehälters 1 flachzylindrisch ausgebildet. Die Abdeckung 153 weist einen äußeren Rand auf, mit dem sie den zentralen Bereich 150 umlaufenden inneren Rand 151 umgibt. Nach Zusammensetzen und Verschweißen mit dem inneren Rand 151 des Bodens 15 und formschlüssiger Beherbergung des Magneten 2 in dem zentralen Bereich 150 ist der Rand der Abdeckung 153 benachbart zu dem äußeren Rand 152 angeordnet ist, auf dem der aufgestellte Thermobehälter 1 steht. Es ist klar, dass die Abdeckung 153 auch mit dem Boden verlötet sein kann.

Die Abmessungen der Abdeckung 153, des inneren Rands 151 und des äußeren Rands 152 sind dabei vorteilhaft derart ausgewählt, dass der in dem zentralen Bereich beherbergte Magnet 2 des auf dem äußeren Rand 152 des Bodens 15 ruhenden Thermobehälters 1 mit einem vorbestimmten geringen Abstand von max. 2mm und vorteilhaft max. 1mm von einer Oberfläche beabstandet ist, auf die der Thermobehälter aufgestellt ist. Auf diese Weise ist der Magnet mit dem geringen Abstand von einem Metallelement M an der Oberfläche beabstandet und kann sein volle Anziehungskraft entfalten, so dass der Thermobehälter 1 vorteilhaft standfest und rutschfest aufgestellt ist.

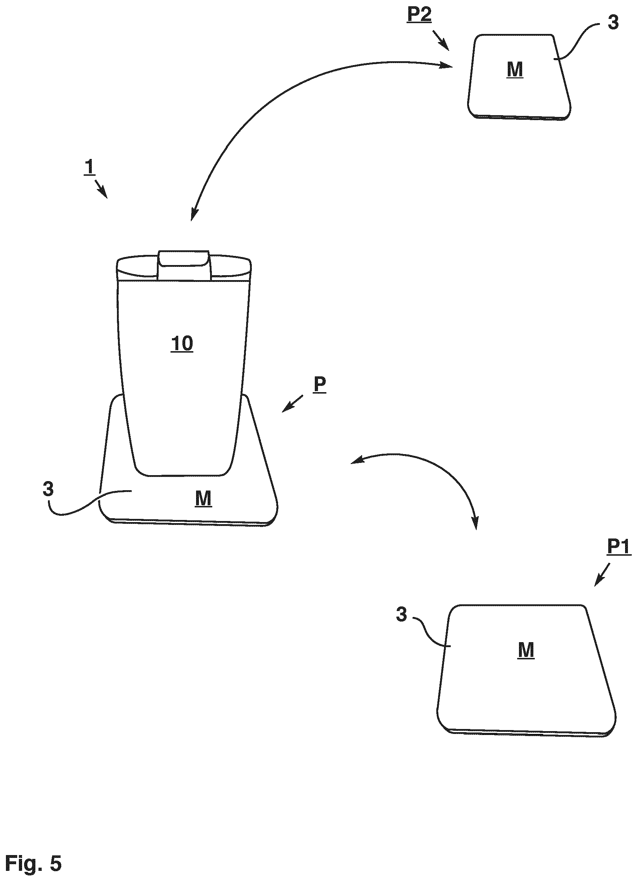

Fig. 5 zeigt den Thermobehälter 1 von Fig. 1 zusammen mit für den Thermobehälter 1 und insbesondere dessen standfeste und rutschfeste Positionierung geeigneten Untersetzern 3.

Bei dem flachen Untersetzer 3 handelt es sich geeigneter Weise um ein Nano-Gel Klebepad mit einer rutschfesten und haftenden Unterseite, der eine mit dem Magnet 2 des Thermobehälters 1 zusammenwirkende Metallschicht M aufweist. Der Untersetzer 3 ist dabei mit seiner rutschfesten und haftenden Unterseite geeignet ausgebildet, um auf einfache und flexible Weise an einer vorbestimmten Position P, P1, P2 auf eine Oberfläche z.B. eines Einrichtungsgegenstands, wie etwa eines Tisches, einer Ablage oder eines Regals aufgesetzt zu werden, wonach der Untersetzer 3 rutschfest und haftend und zugleich reversibel für seine bestimmungsgemäße Verwendung in Zusammenwirken mit dem Thermobehälter 1 positioniert ist. Der Untersetzer 3 von Fig. 5, auf den der Thermobehälter 1 aufgestellt ist, weist dabei geeigneter Weise eine Oberfläche auf, die mit den Abmessungen des Bodens 15 korrespondiert und vergleichsweise größer als der Boden 15 ausgebildet ist.

Der auf den Untersetzer 3 aufgesetzte Thermobehälter 1 wirkt dabei mit seinem Magnet 2 bestimmungsgemäß derart mit dem eine Metallschicht M aufweisenden Untersetzer 3 zusammen, dass der Thermobehälter 1 standfest und auch rutschfest auf dem Untersetzer 3 gehalten wird.

Der Untersetzer 3, der mit dem Magnet 2 des Thermobehälters 1 zusammenwirkt, ist dabei mit seiner Unterseite an einer vorbestimmten Position P, P1 oder auch P2 rutschfest haftend angeordnet. In Fig. 5 sind neben dem vorstehenden Untersetzer 3 an der Position P noch zwei weitere beispielhafte Positionen P1 und P2 schematisch dargestellt. Wie bereits vorstehend erwähnt kann es sich bei den Positionen P, P1 und P2 jeweils um eine vorbestimmte Position P, P1, P2 auf einer Oberfläche z.B. eines Einrichtungsgegenstands, wie etwa eines Tisches oder Regals oder einer Ablage insbesondere auch in einem Fahrzeug handeln.

Mit einem standfesten Thermobehälter 1, dessen Boden 15 einen zentralen Magnet 2 aufweist, und wenigstens einem mit dem Thermobehälter 1 zusammenwirkenden Untersetzer 3, der eine mit dem Magnet 2 zusammenwirkende Metallschicht M aufweist und als Nano-Gel Klebepad mit einer rutschfesten und haftenden Unterlage ausgebildet ist, ist ein System 1, 2, 3 zum rutschfesten Aufstellen des standfesten Thermobechers 1 an wenigstens einer vorbestimmten Position P, P1, P2 bereitgestellt. Das System 1, 2, 3 kann vorteilhaft eine Vielzahl von Untersetzern 3 aufweisen, die zur jeweils standfesten und rutschfesten Positionierung des Thermobechers 1 an einer Vielzahl von Positionen P, P1, P2 vorgesehen sind.

Fig. 6 zeigt eine weitere Darstellung des Thermobehälters 1 von Fig. 3 und 4, wobei hier nachfolgend unter Bezugnahme auf Fig. 6 auch bevorzugte Abmessungen und Dimensionen und insbesondere auch dessen bevorzugte Aufnahmekapazität für einen als sicher und einfach handhabbaren Thermobecher 1 ausgebildeten Thermobehälter 1 beschrieben werden. Bei dieser Gelegenheit sei hier erneut darauf hingewiesen, dass es sich bei der nachfolgend unter Bezugnahme auf Fig. 6 beschriebenen vorteilhaften Ausführung eines Thermobehälters 1 um ein bevorzugtes Ausführungsbeispiel handelt. Wie bereits eingangs erwähnt ist ein erfindungsgemäßer Thermobehälter grundsätzlich in seinen Abmessungen und Dimensionen und insbesondere seiner Aufnahmekapazität nicht beschränkt und kann dementsprechend beliebig dimensioniert und ausgestaltet sein kann.

Fig. 6 zeigt zum besseren Verständnis insbesondere auch der vorteilhaften Ausbildung und Anordnung des Magneten 2 in dem zentralen Bereich 150 des Bodens 15, und der vorteilhaften Ausbildung des Thermobehälters 1 als Thermobecher 1, der insbesondere auch für den sicheren Transport von Lebensmitteln in flüssiger Form und auch deren Konsum direkt aus dem Thermobecher 1 geeignet ist, eine weitere Darstellung des Thermobehälters 1 von Fig. 3 und 4 ebenfalls in einem Längsschnitt. Wie in Fig. 3 und 4 ist auch in Fig. 6 der Klarheit und Übersichtlichkeit halber und zum besseren Verständnis nur der Magnet 2 schraffiert dargestellt.

In der Explosionsdarstellung von Fig. 3 ist wie ersichtlich und vorstehend beschreiben der Magnet 2 außerhalb und gegenüberliegend beabstandet von dem zentralen Bereich 150 des Bodens 15 und auch beabstandet von der Abdeckung 153 dargestellt. In Fig. 4 ist der Magnet 2 des zusammengesetzten Behälters 10 bestimmungsgemäß in dem von der Abdeckung 153 abgedeckten zentralen Bereich 150 angeordnet. Zum besseren Verständnis zeigt hierzu Fig. 6 in einer Zusammenschau von Fig. 3 und 4 den Magnet 2 wie auch in Fig. 3 außerhalb und gegenüberliegend beabstandet von dem zentralen Bereich 150 des Bodens 15, wobei die Abdeckung 153 benachbart zu und in bestimmungsgemäßen Kontakt mit dem Magnet 2 dargestellt ist, was deren relativer Anordnung von Fig. 4 entspricht.

In Fig. 6 ist entsprechend deutlicher dargestellt, dass die Abdeckung 153 wie auch bereits schematisch in Fig. 1 dargestellt einen zentralen geringfügig abgestuften Bereich aufweist, der bei dem zusammengesetzten Behälter 10 von Fg. 4 in Berührungskontakt mit dem Magnet 2 steht. Dabei ist ein diesen geringfügig abgestuften zentralen Bereich umgebender ringförmiger Randbereich der Abdeckung 153 benachbart zu deren äußerem Rand, der den zentralen Bereich 150 umlaufenden inneren Rand 151 umgibt, geringfügig von dem Magnet 2 des bestimmungsgemäß zusammengesetzten Behälters 10 beabstandet.

Der zentrale Bereich 150 des Bodens 15 weist benachbart zu dem inneren Rand 151 einen flachen ringförmigen Bereich auf, der die vorstehend beschriebene stoffschlüssig versiegelte Saugöffnung im Zentrum des inneren zentralen Bereichs 150 umgibt. Die Saugöffnung bildet dabei gegenüber dem vorstehenden, sie umgebenden flachen ringförmigen Randbereich des zentralen Bereichs 150 eine Vertiefung. Der formschlüssig in dem zentralen Bereich 150 angeordnete Magnet 2 ist dabei wie in Fig. 4 und 6 dargestellt jeweils benachbart zu diesem flachen ringförmigen Randbereich des zentralen Bereichs 150, und benachbart zu dem inneren Rand 151 und benachbart zu dem vorstehend beschriebenen geringfügig abgestuften zentralen Bereich der Abdeckung 153 angeordnet. Der auf diese Weise bestimmungsgemäß in dem zentralen Bereich beherbergte Magnet 2 ist dabei von dem Boden der zentralen versiegelten Saugöffnung beabstandet und wie vorstehend beschrieben außerdem geringfügig von dem ringförmigen Randbereich der Abdeckung 153 beabstandet.

Für eine besonders stabile und sichere Positionierung und Abdeckung des Magneten 2 in dem zentralen Bereich 150 kann der Magnet 2 jeweils insbesondere im Bereich des die zentrale versiegelte Saugöffnung umgebenden flachen ringförmigen Bereichs vollständig oder punktuell mit dem zentralen Bereich 150 des Bodens 15 und auch mit der Abdeckung 153 mittels einem geeigneten insbesondere auch temperaturbeständigen Flüssigklebstoff oder einem geeigneten, insbesondere doppelseitigen Klebeband oder doppelseitigen Klebepads verklebt sein. Ein geeigneter Flüssigklebstoff kann beispielsweise auf Polymer-Basis modifizierter Silane (MS-Polymer-Basis) ausgewählt sein. Dabei kann der vertiefte Bereich um die zentrale versiegelte Saugöffnung von einem Flüssigklebstoff geeigneter Weise vollständig ausgefüllt sein oder von einem geeigneten Klebeband oder Klebepad auch vollständig abgedeckt sein. Der Magnet 2 kann außerdem auch mechanisch in den zentralen Bereich 150 des Bodens 15 geklemmt sein oder in den zentralen Bereich 150 eingesetzt und seitlich gepresst sein oder in dem zentralen Bereich 150 des Bodens 15 mit dem Boden 15 verschraubt sein, der hierfür geeignet ausgebildet sein kann.

Geeignete Abmessungen des flachzylindrisch ausgebildeten Magneten 2 korrespondieren dabei jeweils mit den entsprechenden Abmessungen des zentralen Bereichs 150, dessen Durchmesser im Wesentlichen dem Durchmesser D2 des Magneten 2 entspricht. Der den zentralen Bereich 150 umgebende innere Rand151 weist dabei eine vergleichsweise zu der Höhe H152 des äußeren Rands 152, auf dem der aufgestellte Thermobehälter 1 steht, kleinere Höhe H151 auf. Die Höhe H2 des zylindrischen Magneten 2 ist dabei derart kleiner als die Höhe H151 des inneren Rands 151 ausgewählt, dass der in dem zentralen Bereich 150 beherbergte und mit der Abdeckung 153 versehene Magnet 2 in seiner Höhe H21 wie vorstehend beschrieben geringfügig von dem äußeren Rand 152 überragt wird. Der in dem zentralen Bereich beherbergte Magnet 2 des auf dem äußeren Rand 152 des Bodens 15 ruhenden Thermobehälters 1 ist dabei mit einem vorbestimmten geringen Abstand von max. 2mm und vorteilhaft max. 1mm von einer Oberfläche beabstandet, auf die der Thermobehälter 1 aufgestellt ist. Auf diese Weise ist der Magnet 2 mit dem geringen Abstand von einem Metallelement M an der Oberfläche beabstandet und kann seine volle Anziehungskraft entfalten, so dass der Thermobehälter 1 vorteilhaft standfest und rutschfest aufgestellt ist.

Der wie vorstehend ebenfalls beschriebene vorteilhaft als Thermobecher 1 ausgebildete und insbesondere für Flüssigkeiten geeignete Thermobehälter 1 kann für dessen wünschenswert einfache und bequeme Handhabung vorteilhaft eine vergleichsweise zu dem Boden 15 des Behälters 10 große obere Öffnung aufweisen, deren Durchmesser D16 um einen vorbestimmten Betrag größer als der Durchmesser D15 des Bodens 15 ausgebildet ist. Der Thermobecher 1 ist dabei von seinem oberen Rand zu dem Boden 15 hin im Wesentlichen konisch verjüngt ausgebildet und damit insbesondere auch zum Trinken einer Flüssigkeit direkt aus der oberen Öffnung bei abgenommenem oder geöffneten Deckel 16 besonders einfach und bequem zu handhaben.

Ein vorstehender vorteilhaft als Thermobecher 1 ausgebildeter Thermobehälter 1 kann dabei geeigneter mit dem Durchmesser D16 seiner oberen Öffnung, dem Durchmesser D15 seines Bodens 15 und insbesondere auch der Höhe H10 seines Behälters 10 derart dimensioniert sein, dass ein Füllvolumen seiner Aufnahmekammer 14 geeigneter Weise im Bereich von 250ml bis 500ml und für eine wünschenswert einfache Handhabung bevorzugt insbesondere bei ca. 300ml bis 350ml liegt. Ein für ein vorteilhaftes Füllvolumen in einem Bereich von etwa 350ml ausgelegter und vorteilhaft als konisch verjüngter Thermobecher 1 ausgebildeter Thermobehälter 1 kann dabei einen Durchmesser D16 seiner oberen Öffnung von etwa 80 mm, eine Höhe H14 seiner Aufnahmekammer 14 von etwa 110mm bei einer Höhe H10 seines Behälters 10 von etwa 125mm und bei einem Durchmesser D15 seines Bodens 15 von etwa 60mm aufweisen.

Der Boden 15 des Thermobehälters 1 weist demnach eine Höhe H15 von geeigneter Weise etwa 15mm auf. Ein zur Bereitstellung der vorstehend beschriebenen standfesten und rutschfesten Eigenschaften für einen vorstehend als Thermobecher 1 ausgebildeten und für ein Füllvolumen in dem Bereich von 350ml ausgelegten Thermobehälter 1 geeigneter Magnet 2 mit entsprechend wirkungsvollen magnetischen Eigenschaften kann geeigneter Weise vorteilhaft flachzylindrisch mit einem Durchmesser D2 von etwa 40mm und einer Höhe H2 von etwa 4mm ausgebildet sein. Zur formschlüssigen Beherbergung des Magneten 2 in dem Boden 15 korrespondieren der Durchmesser des zentralen Bereichs 150 und die Höhe H151 des den zentralen Bereich 150 umgebenden inneren Rands 151 geeigneter Weise mit dem Durchmesser D2 und der Höhe H2 des Magneten 2.

Ein vorstehend beschriebener, geeigneter Weise als Thermobecher 1 ausgebildeter Thermobehälter 1 ist mit seinen Abmessungen insbesondere auch seines Magneten 2 für ein wünschenswertes Füllvolumen im Bereich von 350ml ausgelegt. Für ein größeres Füllvolumen im Bereich von beispielsweise 500ml bis beispielsweise 1.200ml ausgelegte Thermobehälter 1, sind in ihren Abmessungen geeigneter Weise entsprechend abgewandelt ausgebildet und dimensioniert. Derartige entsprechend größere Thermobehälter 1, die insbesondere in befülltem Zustand ein entsprechend größeres Gewicht aufweisen, können zur Bereitstellung der vorstehend beschriebenen standfesten und rutschfesten Eigenschaften natürlich insbesondere einen Magneten 2 mit entsprechend ausgewählten, geeignet starken magnetischen Eigenschaften aufweisen, wobei der Magnet 2 hierbei natürlich auch einen Durchmesser D2 und eine Höhe H2 mit geeigneten Abmessungen aufweist, was natürlich korrespondierend mit dem Magnet 2 auch für den Boden 15 des Behälters 10 mit insbesondere dem zentralen Bereich 150 und die Abdeckung 153 gilt.

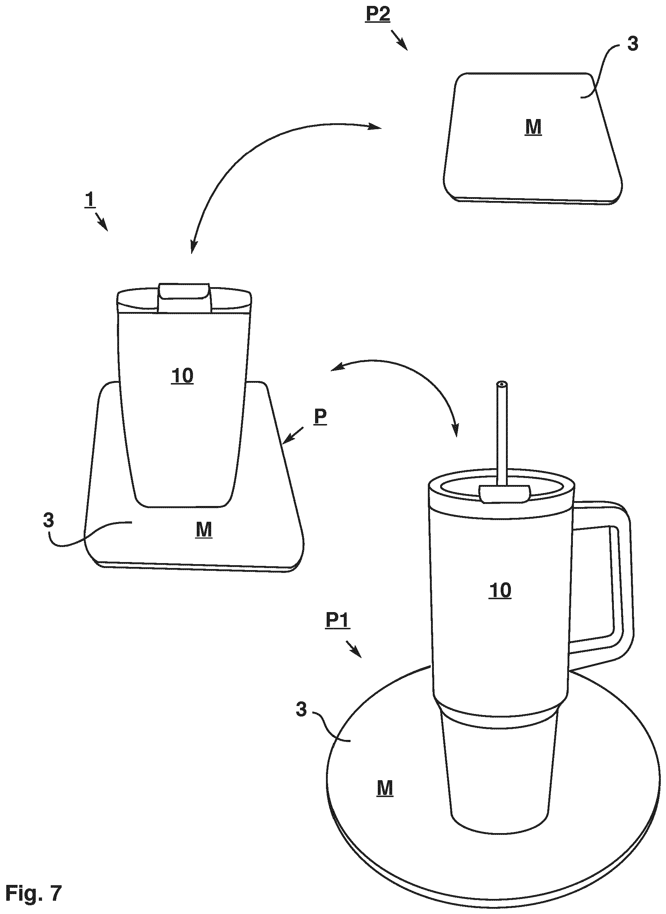

Fig. 7 zeigt hierzu den Thermobehälter 1 von Fig. 1 zusammen mit einem Thermobehälter 1 nach einer weiteren Ausführung der Erfindung und zusammen mit für die Thermobehälter 1 geeigneten Untersetzern 3.

Wie vorstehend unter Bezugnahme auf Fig. 5 beschrieben ist mit zumindest einem standfesten Thermobehälter 1, dessen Boden 15 einen zentralen Magnet 2 aufweist, und wenigstens einem mit dem Thermobehälter 1 zusammenwirkenden Untersetzer 3, der eine mit dem Magnet 2 zusammenwirkende Metallschicht M aufweist und als Nano-Gel Klebepad mit einer rutschfesten und haftenden Unterlage ausgebildet ist, ein System 1, 2, 3 zum rutschfesten Aufstellen des standfesten Thermobechers 1 an wenigstens einer vorbestimmten Position P, P1, P2 bereitgestellt.

Das System 1, 2, 3 kann vorteilhaft eine Vielzahl von Untersetzern 3 und auch eine Vielzahl von Thermobehältern 1 aufweisen, wobei die Untersetzer 3 zur jeweils standfesten und rutschfesten Positionierung der Thermobehälter 1 an einer Vielzahl von Positionen P, P1, P2 vorgesehen und geeignet ausgebildet sind. Der in Fig. 7 linksseitig dargestellte Thermobehälter 1 entspricht dem geeigneter Weise als konisch sich zu seinem Boden 15 verjüngend ausgebildeten, vorstehend unter Bezugnahme auf Fig. 1 und insbesondere auch Fig. 3, 4 und 6 beschriebenen Thermobecher 1, der zur Aufnahme insbesondere einer Flüssigkeit von 350ml geeignet ausgebildet ist. Der auf dem kreisförmig ausgebildeten Untersetzer 3 aufgestellte weitere, vergleichsweise größere Thermobehälter 1 ist zur Aufnahme von beispielsweise einer Flüssigkeit von 500ml ausgelegt und geeigneter Weise ebenfalls sich zu seinem Boden 15 hin konisch verjüngend ausgebildet. Dabei weist der größere Thermobehälter 1 einen oberen Bereich auf, an dem für die einfache Handhabung des Thermobehälters 1 ein Henkel ausgebildet ist. Zwischen dem oberen Bereich des Thermobehälters 1 und dessen unteren Bereich ist unterhalb des Henkels ein schmaler Bereich ausgebildet, in dem sich der Thermobehälter 1 besonders stark verjüngt.

Wie vorstehend insbesondere unter Bezugnahme auf Fig. 6 beschrieben weist der größere Thermobehälter 1 einen geeigneten Magneten 2 auf, der eine geeignete, vergleichsweise starke magnetische Anziehungskraft aufweist, und der dabei insbesondere auch entsprechend geeignete Abmessungen aufweisen kann. Für eine stabile, rutschfeste und sichere Standfestigkeit des Thermobehälters 1 sind die für den Thermobehälter 1 geeigneten Untersetzer 3 des Systems 1, 2, 3 von Fig. 7 insbesondere mit ihrer als Nano-Gel Klebepad mit einer rutschfesten und haftenden ausgebildeten Unterlage und auch ihren Abmessungen korrespondierend mit dem größeren Thermobehälter 1 geeignet ausgebildet, und dabei natürlich auch weiterhin für den kleineren Thermobehälter 1 geeignet.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Thermobehälter, Thermobecher
- 10: Behälter
- 11: Innenkörper
- 12: Außenkörper
- 13: Hohlraum
- 14: Aufnahmekammer

- 15: Boden
- 150: zentraler Bereich
- 151: innerer Rand
- 152: äußerer Rand
- 153: Abdeckung

- 16: Deckel

- 2: Magnetelement, Magnet, Neodym Magnet

- 3: Untersetzer

- M: Metallschicht, Metalllage, Metallelement
- P, P1, P2: Position
- D2, D15, D16: Durchmesser
- H2, H21, H14, H15, H151, H152: Höhe

## Patentansprüche

1. Thermobehälter (1) zur temperaturerhaltenden Lagerung und insbesondere zum temperaturerhaltenden Transport von Lebensmitteln mit einem Behälter (10) mit einer Aufnahmekammer (14) für Lebensmittel und einem Deckel (16) zum Verschließen des Thermobehälters 1, wobei
der Behälter (10) benachbart zu seinem Boden (15) einen zentralen Magnet (2) aufweist, der in seinen magnetischen Eigenschaften mit insbesondere seiner Haltekraft bzw. seiner magnetischen Anziehungskraft und seinen Abmessungen in Übereinstimmung mit dem Thermobehälter (1) derart ausgewählt, ausgebildet und angeordnet ist, dass
der Thermobehälter (1) von dem Magnet (2) an einer vorbestimmten Position (P, P1, P2) standfest, rutschfest und ortsfest gehalten wird, an der ein geeignetes Metallelement oder eine geeignete Metallschicht (M) vorgesehen ist, die mit dem Magnet (2) zusammenwirkt.

2. Thermobehälter (1) nach Anspruch 1, wobei
der Boden (15) einen äußeren umlaufenden Rand (152) aufweist, und der Magnet (2) derart angeordnet und ausgebildet ist, dass der auf den Boden (15) aufgestellte Thermobehälter (1) auf dem äußeren Rand (152) ruht, während der zentral angeordnete Magnet (2) mit einem vorbestimmten geringen Abstand von einer Oberfläche beabstandet ist, auf die der Thermobehälter (1) aufgestellt ist.

3. Thermobehälter (1) nach Anspruch 2, wobei
der Magnet (2) flachzylindrisch ausgebildet ist und
der Boden (15) einen zentralen Bereich (150) zur Beherbergung des Magneten (2) aufweist, der von einem inneren Rand (151) begrenzt wird, wobei der Magnet (2) formschlüssig korrespondierend mit dem zentralen Bereich (150) ausgebildet ist und von einer Abdeckung (153) in dem zentralen Bereich (150) gehalten und geschützt wird.

4. Thermobehälter (1) nach Anspruch 3, wobei der innere Rand (151) niedriger ist als der äußere Rand (152) und von dem äußeren Rand (152) umgeben wird, auf dem der aufgestellte Thermobehälter (1) steht, und wobei sich zwischen dem inneren Rand (151) und dem äußeren Rand (152) eine um den inneren Rand (151) umlaufende Nut erstreckt, in die ein äußerer Rand der Abdeckung (153) eingreift.

5. Thermobehälter (1) nach Anspruch 3 oder 4, wobei die Abmessungen des Bodens (15) mit dem zentralen Bereich (150), der Abdeckung (153), des inneren Rands (151) und des äußeren Rands (152) derart ausgewählt und ausgebildet sind, dass der in dem zentralen Bereich (150) formschlüssig beherbergte Magnet (2) des auf dem äußeren Rand (152) des Bodens (15) ruhenden Thermobehälters (1) mit einem vorbestimmten geringen Abstand von max. 2mm und vorteilhaft max. 1mm von einer Oberfläche beabstandet ist, auf die der Thermobehälter (1) aufgestellt ist.

6. Thermobehälter (1) nach einem der Ansprüche 3 bis 5, wobei der Behälter (10) des Thermobehälters (1) aus einem Edelstahlmaterial ausgebildet ist, und außenseitig lackiert oder beschichtet und/oder eloxiert ist,
und die Abdeckung (153) aus einem Edelstahlmaterial bereitgestellt ist, und
der Magnet (2) ein Neodym Magnet (2) ist.

7. Thermobehälter (1) nach einem der Ansprüche 3 bis 6, wobei die Abdeckung (153) mit dem Boden (15) des Thermobehälters (1) verschweißt oder verlötet oder verklebt ist oder auf geeignete mechanische Weise an dem Boden (15) befestigt ist, wobei die Abdeckung (153) insbesondere mit dem inneren Rand (151) des zentralen Bereichs (150) des Bodens (15) verschweißt sein kann.

8. Thermobehälter (1) nach einem der Ansprüche 3 bis 7, wobei der Magnet (2) mit dem zentralen Bereich (150) des Bodens (15) verklebt ist oder mechanisch in den zentralen Bereich (150) des Bodens (15) geklemmt oder gepresst ist oder in dem zentralen Bereich (150) des Bodens (15) mit dem Boden (15) verschraubt ist.

9. Thermobehälter (1) nach einem der vorstehenden Ansprüche, wobei die Aufnahmekammer (14) des Behälters (10) insbesondere zur Aufnahme von Lebensmitteln in flüssiger Form und Getränken geeignet ist, und wobei
mit dem Thermobehälter (1) ein Thermobecher (1) bereitgestellt ist, und wobei
zur Bereitstellung einer wünschenswerten thermischen Isolationswirkung der Aufnahmekammer (14) der Behälter (10) doppelwandig ausgeführt ist und einen Innenkörper (11) und einen Außenkörper (12) aufweist, wobei zwischen dem Innenkörper (11) und dem Außenkörper (12) ein Hohlraum (13) ausgebildet ist, der evakuiert sein kann.

10. Thermobehälter (1) nach Anspruch 9, wobei
der Thermobehälter (1) zu seinem Boden (15) hin konisch verjüngt ausgebildet ist.

11. Thermobehälter (1) nach Anspruch 9 oder 10, wobei die Aufnahmekammer (14) des Thermobehälters (1) zur Aufnahme eines Flüssigkeitsvolumens im Bereich von 100ml bis 1.500ml und bevorzugt von 250ml bis 500ml und besonders bevorzugt von etwa 300ml bis 350ml geeignet ausgebildet ist.

12. Thermobehälter (1) nach einem der Ansprüche 9 bis 11, wobei der Innenkörper (11) des Behälters (10) eine Kupferbeschichtung aufweist, so dass Strahlungswärme aus der Aufnahmekammer (14) an der Kupferbeschichtung reflektiert.

13. Thermobehälter (1) nach einem der Ansprüche 9 bis 12, wobei ein zentraler Bereich des Außenkörpers (12) am Boden (15) des Thermobehälters (1) zusammen mit dem inneren Rand (151) und der Abdeckung (153) den zentralen Bereich (150) bildet, in dem der insbesondere flachzylindrisch ausgebildete Magnet (2) formschlüssig beherbergt ist.

14. System (1, 2, 3) mit einem Thermobehälter (1) nach einem der Ansprüche 1 bis 13, und
wenigstens einem mit dem Thermobehälter (1) und dem Magnet (2) korrespondierenden Untersetzer (3), der eine mit dem Magnet (2) zusammenwirkende Metallschicht (M) aufweist und als Nano-Gel Klebepad mit einer rutschfesten, haftenden Unterseite derart ausgebildet ist, dass der Untersetzer (3) an einer vorbestimmten Position (P, P1, P2) auf einer Oberfläche rutschfest und ortsfest haftet, und dabei insbesondere mit dem Magnet (2) bestimmungsgemäß derart zusammenwirkt, dass der auf den Untersetzer (3) aufgestellte Thermobehälter (1) standfest, rutschfest und ortsfest positioniert ist.

15. System (1, 2, 3) nach Anspruch 14 mit mehr als einem Thermobehälter (1), wobei
die Thermobehälter (1) insbesondere auch mit ihren Abmessungen und ihrem Füllvolumen und mit ihren Magneten (2) unterschiedlich ausgebildet sein können.
